# EUROPEAN PATENT APPLICATION

(11) **EP 2 000 522 A1**
(43) Date of publication of application: **10.12.2008**
(21) Application number: 08251905.9
(22) Date of filing: 30.05.2008
(51) Int. Cl.: C10L 1/02, C11C 3/00

(54) **Method for the production of biodiesel from vegetable oils and fats, using heterogeneous catalysts**

(30) Priority: 30.05.2007 BR PI0702373
(71) Applicant: Petroleo Brasileiro S.A. Petrobras, CEP-20035-900 Rio de Janeiro (BR)
(72) Inventor: Portilho, Marcio de Figueiredo of Rua Candido Potinari, Matacapa, Niteroi, RJ -CEP: 24.325-300 (BR); Viera, José Antionio Vidal of Avenida do Pepe,, Rio de Janeiro, RJ, CEP : 22.600-000 (BR); Zotin, Jose Luiz of Rua Aberema, Rio de Janeiro, RJ CEP: 21.940-190 (BR); Da Silva Lima, Michele Sabba of Rua Albano, Rio de Janeiro, RJ, CEP: 24.756-660 (BR)
(74) Representative: Benson, John Everett

(57) **Abstract**

The invention relates to the field of methods used for the transesterification of oils and fats in order to produce diesel oil. The invention provides a novel method for the production of diesel oil by transesterifying fatty acid esters present in vegetable oils and fats, using a novel catalyst consisting of the oxide of a group V metal and having the formula X₂O₅, such as niobium pentoxide (Nb₂O₅). Unlike in the methods used traditionally according to the prior art, the oils are converted here into high-purity products, including glycerol, in yields of the order of 100%, while using significantly less catalyst for a quantity of oil processed, when e.g. soya-bean oil, cotton-seed oil and canola oil are processed by the method according to the invention.

## Description

### Field of the invention

The present invention relates to the field of methods used for the transesterification of oils and fats in order to produce diesel oil. More specifically, the invention provides a novel method for the production of diesel oil by transesterifying vegetable oils and fats, using a heterogeneous catalyst other than those traditionally employed in the prior art.

### Background to the invention

Numerous investigations have been carried out since the middle of the last century in order to find alternative methods for the production of fuels from renewable sources or industrial waste. Transesterification or alcoholysis has emerged as a rather advantageous method for the viable production of fuels from triglycerides, which are present for example in vegetable oils. The following literature references are cited in EP 0,127,104 in this connection:
1) U. Schuchard et al., Transesterification of vegetable oils: a review, J. Braz. Chem. Soc., vol. 9, No. 1, (1998) pp. 199-210, and
2) F. Ma and M.A. Hanna, Biodiesel production: a review, Bioresource Technology, 70 (1999) pp. 1-15.

Methanol or ethanol is used in the presence of homogeneous catalysts to form glycerol and long-chain esters, as shown in the following reaction:

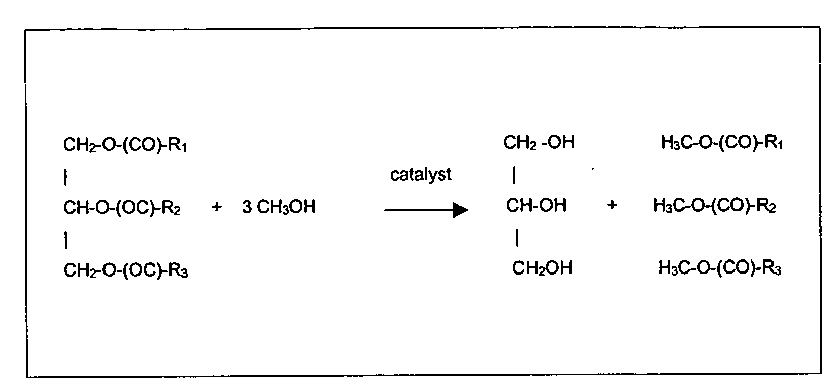

US Patent No. 4,695,411 describes a method the main aim of which is to provide an economic process for the preparation of a mixture of high-purity esters in a high yield by using "hydrated alcohol". This method is employed with oils of vegetable or animal origin, including oils extracted from seeds.

Similarly, US Patents 4,164,506 and 4,698,186 describe methods in which triglycerides are esterified in two stages, using acid catalysts.

The non-alkaline catalysts described in US Patent 5,525,126 have the additional advantage of not catalysing the formation of soaps, so they do not allow the pre-esterification of triglycerides.

The method according to WO 03/093, 400 involves the use of phosphorus compounds as polymerization inhibitors, as well as the use of iron or copper compounds as reducing agents in order to modify oxidative cracking reactions in which ozone is used. Successive stages of filtration and cracking lead to a lighter fraction of compounds with excellent properties for use as diesel oil.

However, transesterification with methanol or ethanol presents some problems. Thus, due to the impurities present in the products obtained, the combustion of the fuel made by the alcoholic transesterification of triglycerides gives rise to considerable amounts of formaldehyde, acrolein and benzene are formed, which damage the pistons and engines, apart from being pollutants. It can be seen from the prior art that the studies on the processing of vegetable oils that have recently been carried out and published in the scientific and patent literature constantly mention the problem of preventing the formation of undesirable byproducts. This calls for a stage of purification by distillation and makes the industrial production of esters from vegetable oils and fats unattractive.

US Patent No. 5,908,946 describes a method for the production of a fuel from vegetable or animal oils with the aid of a heterogeneous catalyst to promote alcoholysis. This catalyst comprises a mixture of zinc oxide and aluminium oxide, and the method gives pure glycerol as well.

Synthetic clays such as hydrotalcites make good heterogeneous catalysts for alcoholysis and give rise to less free fatty acids than natural clays do which consist of alumina and silica, such as montmorillonites, as can be seen from the following publications:
1) F.C. Silva et al., Natural clays as efficient catalysts for transesterification of β-ketoesters with carbohydrate derivatives, Tetrahedron Letters, 43 (2002) p. 1165,
2) B.M. Choudary et al., Mg-Al-Olt-Bu hydrotalcite: a new and efficient heterogeneous catalyst for transesterification, Journal of Molecular Catalysis A - Chemical, 2000*,*
3) D.G. Cantrell et al., Structure-reactivity correlations in MgAl hydrotalcite catalysts for biodiesel synthesis, Applied Catalysis A: General, vol. 287, No. 2 (22 June 2005), pp. 183-190.

However, the residues of dissolved metals in the biodiesel formed there can reach very high levels, which are proportional to the initial acidity of the oil used.

### Brief description of the invention

The transesterification of vegetable oils aimed at the production of fatty acid esters is widely used in industry, having been adapted since 1980 for making a fuel that is an alternative to diesel oil. Homogeneous catalysts have given a high conversion and high purity, but the intense search for solid catalysts has not produced significant results yet.

However, the present invention provides a method for the production of esters from vegetable or animal oils, such as soya-bean oil, cotton-seed oil and canola oil, which method gives high yields and leads to products of a high purity. It also gives glycerol of a better quality than that obtained by methods according to the prior art. A novel method is now provided for the production of biodiesel, in which solid catalysts are used. The catalyst is used here in an amount of 1-5 wt-%, calculated on the oil to be processed, which is much less than the amount used in other methods. The transesterification of fatty acids is carried out either with lower alcohols such as methanol and ethanol, or with alcohols having a longer carbon chain. The catalyst is separated from the products by filtration. The present invention introduces a novel use of oxides of group V elements and preferably niobium(V) oxide (Nb₂O₅) as heterogeneous catalysts for the transesterification process.

### Detailed description of the invention

The present invention provides a transesterification method for the production of fatty acid esters from vegetable oils and fats, using: a solid catalyst, a reactor for continuous or batchwise operation, a reaction temperature of between 65 and 290°C, a reaction time of 1-8 hours, one or more steps, and a molar ratio between the catalyst and the oil of between 1:3 and 1:30. The method comprises the following steps:
a) a charge of oil or fat of vegetable or animal origin is supplied for the transesterification process,
b) a solid catalyst is admixed to this charge in the course of 1-8 hours and preferably 2-5 hours to initiate transesterification reactions in one or more closed reactors under the self-generated pressure of the system and with efficient stirring at a temperature of between 65 and 290°C and preferably between 150 and 250°C,
c) the glycerol formed is removed, and
d) the solid catalyst is separated from the products by filtration or decanting.

The present invention also provides a method for the preparation of a novel catalyst for transesterification, which comprises a solid oxide that may or may not be supported on another solid oxide, or else it comprises any mixture of solid oxides. The solid oxide may be a natural clay belonging to the montmorillonite family, such as vermiculite, smectite and attapulgite, or it is preferably an oxide of a group V metal having the formula X₂O₅, which is used either in the pure state or it is supported on another solid that can confer the right textural properties on the said catalyst, which is more preferably niobium pentoxide (Nb₂O₅).

The said catalyst can be prepared by various conventional methods. Three methods are described below, but the invention is in no way restricted to them and they do not limit the originality of the present invention.

### a) Method for the preparation of a catalyst in powder form

1) 100 g of niobic acid (HY-340 CBMM) are introduced into 300 ml of a 1.0 M solution of phosphoric acid (H₃PO₄).
2) The mixture is stirred for 30 minutes.
3) The resulting suspension is filtered.
4) The solid is dried at 120°C for 12 hours.
5) The product is calcined at 550°C for 3 hours.

### Analysis

BET area: 26.5532 m²/g
Pore volume: 0.011256 ml/g
Pore size: 349.300 angstroms.

### b) Method for the preparation of an extruded catalyst

1) 20 g of niobic acid (HY-340 CBMM) are introduced into 4 ml of phosphoric acid (H₃PO₄) and 4 ml of water.
2) The mixture is stirred until it is completely homogeneous.
3) It is then extruded to form a single filament.
4) The filament is dried at 120°C for 12 hours.
5) The product is calcined at 550°C for 3 hours.

### c) Method for the preparation of a catalyst on an alumina support

1) 300 g of alumina (AL 550) with a particle size range of 0.15-0.30 mm are weighed out after drying in an oven at 120°C for 2 hours.
2) To prepare a solution of niobium oxalate, a solution of 108.6 g of oxalic acid (C₂H₂O₄.2H₂O) in 1.364 g of water is heated, 33.9 g of niobic acid (HY-340 CBMM) are added, the mixture is brought to the boil to promote the dissolution of the solid, and then filtered, after cooling, if necessary.
3) The extruded alumina is impregnated with this solution in a single step (phosphoric acid may be added optionally prior to extrusion).
4) The product is dried at 120°C overnight.
5) It is then calcined at 450°C for 3 hours (and checked for loss of weight).
6) Steps 3) to 5) are repeated 6 times, so the product is subjected to a total of 7 impregnation, drying and calcination operations.

### Analysis

Niobium content of the catalyst: 14% (wt/wt)
BET area: 146.5702 m²/g
Pore volume: 0.255429 ml/g
Pore size: 60.1310 angstroms.

The method according to the invention makes it possible to convert oils and fats of vegetable or animal origin into fatty acid esters, giving high-purity products with a very high degree of efficiency.

More specifically, the starting material used is soya-bean oil, cotton seed oil, canola oil, castor oil, peanut oil or any other vegetable oil, whether pure or previously used, but animal oils and fats can also be employed.

As the following examples show, the method according to the invention gives a conversion of the order of 100% in a single step.

The determination of metals in the products by atomic absorption spectroscopy showed that the niobium content was below the detection limit, which confirms that the catalysis in question takes place in a heterogeneous medium.

### Examples

The reaction was carried out in a batch-type reactor with a capacity of 300 ml at the self-generated pressure of the system, with mechanical stirring at 500 rpm, the molar ratio between the oil and alcohol being 1:30.

The products obtained were analysed by carbon-13 nuclear magnetic resonance (¹³C-NMR) spectroscopy.

### Example 1

Reaction conditions: 225°C for 2 hours in a single step under a pressure of 50-60 kg/cm²
Composition of the reaction mixture:
a) 100.08 g of canola oil
b) 100.07 g of methanol
c) 1.0008 g of Nb₂O₅, calcined at 550°C
Conversion: 97.80% of the oil was converted into methyl esters, and
2.20%of it was converted into mono- and diglycerides.

### Example 2

Reaction conditions: 225°C for 2 hours in a single step under a pressure of 50-60 kg/cm²
Composition of the reaction mixture:
a) 100.95 g of canola oil
b) 100.67 g of methanol
c) 1.0102 g of Nb₂O₅, calcined at 550°C
Conversion: 89.50% of the oil was converted into methyl esters
7.20%of it was converted into mono- and diglycerides, and
3.30%of the oil was left behind in the unreacted state.

### Example 3

Reaction conditions: 225°C for 4 hours in a single step under a pressure of 35-40 kg/cm²
Composition of the reaction mixture:
a) 100.00 g of canola oil
b) 100.00 g of ethanol
c) 1.0000 g of Nb₂O₅, calcined at 550°C
Conversion: 93.07%of the oil was converted into ethyl esters, and 6.93%of it was converted into mono- and diglycerides.

### Example 4

Reaction conditions: 225°C for 2 hours in a single step under a pressure of 35-40 kg/cm²
Composition of the reaction mixture:
a) 100.00 g of the product used in Example 3
b) 100.00 g of ethanol
c) 1.0000 g of Nb₂O₅, calcined at 550°C
Conversion: 98.70% of the oil was converted into ethyl esters, and 1.30% of it was converted into mono- and diglycerides.

## Claims

1. Method for the production of biodiesel from oils and/or fats, which comprises the following steps:
a) a charge comprising oil and/or fat of vegetable and/or animal origin, in a pure or used state, is supplied for a transesterification process;
b) a solid catalyst is admixed to this charge preferably in the course of 1-8 hours, more preferably 2-5 hours, to conduct transesterification reactions in one or more reactors under self-generated pressure of the system and with stirring at a temperature of between 65 and 290°C and preferably between 150 and 250°C;
c) the glycerol formed is removed;
d) the solid catalyst is separated from the products by filtration and/or decanting.

2. Method according to claim 1, where the said charge comprises one or more of soya-bean oil, cotton-seed oil, canola oil, castor oil and peanut oil.

3. Method according to claim 1 or 2, where the said solid catalyst comprises a solid oxide used either in the pure state or supported on a support.

4. Method according to claims 3, where the support for the solid catalyst comprises another solid, preferably another solid oxide, more preferably alumina (Al₂O₃).

5. Method according to claims 1, 2, 3 or 4, where the said solid oxide comprises a clay belonging to the montmorillonite family, such as one or more vermiculite, smectite and attapulgite, and/or it comprises an oxide of a metal belonging to group V of the periodic table of chemical elements and having the formula X₂O₅, preferably niobium pentoxide (Nb₂O₅).

6. Solid catalyst for the transesterification of fatty acid esters, comprising niobium pentoxide (Nb₂O₅) either in the pure state or as a mixture with another solid.

7. Catalyst according to claim 6, which is in powder form, obtained by calcining niobic acid.

8. Catalyst according to claim 6, which is in the extruded form, obtained by extruding and calcining a mixture of niobic acid and a solution of phosphoric acid (H₃PO₄).

9. Catalyst according to claim 6, which is in the extruded form and is obtained by impregnating extruded alumina (Al₂O₃) with a solution of niobium oxalate [Nb₂(C₂O₄)₅] and optionally with a solution of phosphoric acid (H₃PO₄).

10. Method for the production of biodiesel from oils and fats, which comprises the following steps:
a) a charge of oil or fat of vegetable or animal origin is supplied for the transesterification process;
b) a solid catalyst is admixed to this charge in the course of 1-8 hours and preferably 2-5 hours to initiate transesterification reactions in one or more closed reactors under the self-generated pressure of the system and with efficient stirring at a temperature of between 65 and 290°C and preferably between 150 and 250°C;
c) the glycerol formed is removed;
d) the solid catalyst is separated from the products by filtration or decanting.

11. Method according to claim 1, where the said charge of vegetable oil or fat, preferably soya-bean oil, cotton-seed oil, canola oil, castor oil, peanut oil or any other vegetable or animal oil in the pure or used state.

12. Method according to claim 1, where the said solid catalyst is a solid oxide either in the pure state or it is supported on another solid.

13. Method according to claims 1 and 3, where the said solid oxide is a clay belonging to the montmorillonite family, such as vermiculite, smectite and attapulgite, or it is preferably an oxide of a metal belonging to group V of the periodic table of chemical elements and having the formula X₂O₅, either in the pure state or supported on another solid that can confer the right textural properties on the catalyst, which is preferably niobium pentoxide (Nb₂O₅).

14. Method according to claims 1 and 4, where the support for the solid oxide is another solid, preferably another solid oxide, more preferably alumina (Al₂O₃).
